# EUROPEAN PATENT APPLICATION

(11) **EP 3 079 108 A1**
(43) Date of publication of application: **12.10.2016**
(21) Application number: 15163129.8
(22) Date of filing: 10.04.2015
(51) Int. Cl.: G06Q 10/00, G06Q 50/12

(54) **RESTAURANT RESERVATION AND TABLE ALLOCATION**

(71) Applicant: "xTradeSoft" GmbH, 1030 Wien (AT)
(72) Inventor: Briem, Michael Dr., 98000 Monaco (MC)
(74) Representative: Ellmeyer, Wolfgang

(57) **Abstract**

A restaurant reservation method comprising
- Receiving a reservation query from a person indicating a reservation requirement for one of a plurality of member restaurants;
- Determining a unique identifier of the querying person;
- Identifying the querying person via the determined unique identifier by comparing it with a plurality of unique identifiers stored in a centralized database and related to entries of customers from the plurality of member restaurants having access to the centralized database;
- Giving access to different sets of tables to the querying person depending either
- on the frequency of reservations within a predetermined period of time in the one member restaurant the reservation query is related to fulfilling the one member restaurant's criteria for privileged access of tables or
- on the consumption of wine and/or on the tip spent within a predetermined period of time in at least two of the plurality of member restaurants fulfilling the plurality of restaurant's criteria for premium customer status.

## Description

The invention refers to a restaurant reservation method.

Restaurant owners generate a substantial part of their revenue with returning customers.

Increasing customer loyalty is probably one of the main marketing goals as it has the greatest potential to improve profits for restaurants. Although frequent guests do usually only represent about 15% of a business's customer base, they are accountable at least a third of its revenue.

Furthermore, researchers at Harvard have found out that increasing the amount regular customers by 5%, can help you raise profits anywhere from 25 to 125%.

Restaurant owners have to deal with the problem of whom to allocate a table to, when the table booking demand exceeds availability. Up to now, no automated system is used to prioritize the table allocation based on other criteria than chronology. Currently in restaurants, reservation systems work on a 'first come first serve' basis.

Customers with limited funds but sufficient time, might book tables far in advance on dates known as heavily booked, preventing a frequent customer who will usually be booking on short notice, from making a table reservation. As confirmed by the study mentioned previously, the frequent diner does have a higher yield potential and could be an important factor to increase the yearly revenue.

This invention is a system that will allow restaurant managers to select sets of tables they reserve only for certain kinds of customers, then they can choose the criteria that will give a customer the privilege to make a short notice booking for these tables. Part of the criteria can be for example: the amount of visits, the feedback of other restaurants regarding wine consumption or tipping. Other reservation systems oblige the restaurant manager to block tables manually and then allocate them personally when the regular customers show up. Our system manages that automatically.

The old fashioned paper and pen reservation system as well the electronic reservation book are frustrating for the reservation taker as well as for the reservation booker when under following aspects:
- The booking ruling does not reflect their spending power and spending habits
- -A lot of denials in peak time results in premium dining customers avoiding dining out, so that the restaurant is filled with non premium customers who have a lower consumption power.
- Manual booking is very time consuming as diners try to get a table in many restaurants in peak times. If every guest tries to find a booking in 20 restaurants, this could result in more than 100 denials for a single restaurant, resulting in waste of time for the staff members operating the telephone.

According to the invention the following steps are executed:
- Receiving a reservation query from a person indicating a reservation requirement for one of a plurality of member restaurants;
- Determining a unique identifier of the querying person;
- Identifying the querying person via the determined unique identifier by comparing it with a plurality of unique identifiers stored in a centralized database and related to entries of customers from the plurality of member restaurants having access to the centralized database;
- Giving access to different sets of tables to the querying person depending either
- on the frequency of reservations within a predetermined period of time in the one member restaurant the reservation query is related to fulfilling the one member restaurant's criteria for privileged access of tables or
- on the consumption of wine and/or on the tip spent within a predetermined period of time in at least two of the plurality of member restaurants fulfilling the plurality of restaurant's criteria for premium customer status.

On basis of the unique identifier the identification of the querying person can be accomplished without spelling errors of the customer's name. Further, due to storing the unique identifiers in the centralized database a comparison of data and evaluation can be accomplished on basis of the unique identifiers without the need of exposing the person's identity.

In order to have access to a certain set of tables not available for regular diners one of the following conditions has to be met:

The querying person has made sufficient reservations within an ongoing time period in the member restaurant in order to have " regularly returning customer status" or
the querying person has received restaurant feedback from at least two other member restaurants awarding him premium customer status. Other restaurants may use the option to give Premium customers the same status as "regularly returning customers"

If one of these conditions are met, the status of the diner can be calculated from the entries in the centralized database according to algorithms and tables are displayed accordingly

The invention uses the customer's mobile phone number as unique identifier. Since the mobile phone number is almost always allocated to a single person and not to an institution or a household it can be advantageously used for the purpose of the invention.

A mobile phone number is a very suitable form of a unique identifier for a person, independently from the person or the company who pays the mobile phone bill. A landline can be an optional additional number but is not treated as a unique identifier as it may be used per more persons at home or in a company.

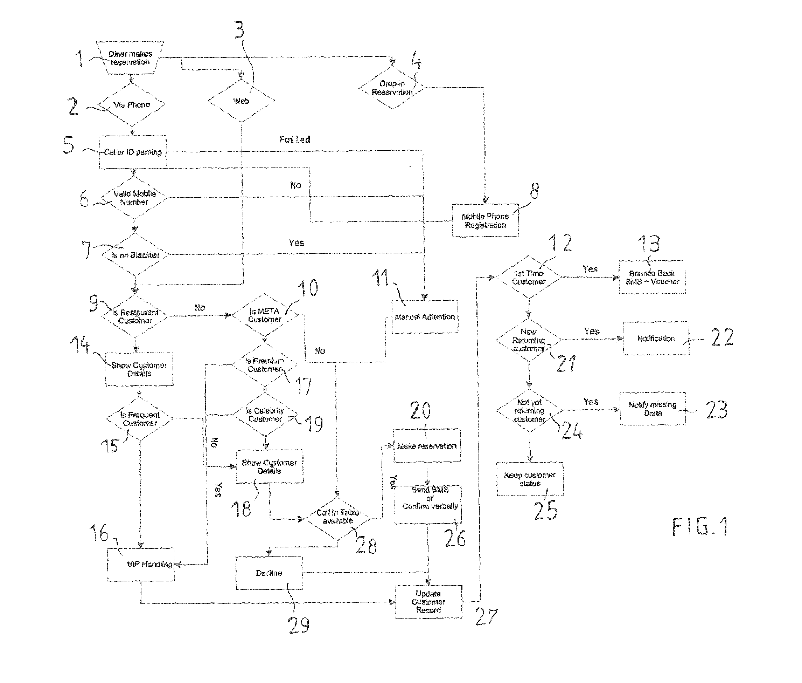

The invention is now described on basis of an embodiment of the invention illustrated in a flow diagram shown in Fig.1

First a reservation query is received from a person indicating a reservation requirement for one of a plurality of member restaurants.

The querying person (box 1) can contact one of the plurality of member restaurant to make a table reservation via phone (box 2) or internet (box 3) or come directly as a Walk-in (box 4).

If the querying person calls, his/her number is verified if it is a mobile number (box 5, 6). If it is not a mobile number the restaurant will give manual attention (box 11) and the person's mobile number will be collected as a unique identifier and checked against the blacklisted database first (box 7).

Within the scope of the invention is recording a telephone calleridentification number by connecting the telephone access point to a caller ID box that connects then to the telephone. The caller ID Box islinked to a webserver and sends instantaneously telephone number captured via Internet to a reservation database.

After query, the database displays the querying person's number either as a mobile number or as an optional landline number (which can be used by more than one person) in push mode on a reservation form of a web application, so the reservation taker does only have to enter time and party size for that reservation. Name has only to be added if not displayed form Restaurants database or centralized database

Incoming calls that are not related with reservations can be stored in a separate database (employees, suppliers), to avoid to have the number popping up in the reservation form.

Callers ID Number will be stored in a centralized webserver database, which:
Does check if the call is coming from a cell phone or a landline by checking mobile phone prefixes. Prefixes are checked if they belong to a mobile phone provider http://en.wikipedia.org/wiki/List_of_mobile_phone_number_serie s_by_country.

The system compares the incoming caller ID number with telephone numbers stored in the restaurant customer database. If the call is initiated from a mobile phone and a match is found, the corresponding profile will pop up with: the name of the guest, his status and the booking history.

If the call is initiated from a landline and the system finds one or more names associated with this number the order taker may choose the right name and will ask the diner for the unique identifier, the mobile phone number, which is then added to the profile of the customer, if not yet already stored.

If the querying person drops in the one member restaurant to make a reservation, the manager will ask him for his mobile number (box 8) and this number is checked against the blacklisted database first (box 7).

A querying person who uses the internet (box 3) to make a reservation has to store his/her mobile number so it can be first checked against the blacklist database.

A plurality of unique identifiers are stored in a centralized database and are related to entries of customers from the plurality of member restaurants having access to the centralized database.

If the querying person **is found** in the restaurants database (centralized database relating to the one member restaurant), the database displays customer details (Box 9),shows customer details and calculates the number of visits in a defined period and displays results (Box 14). If number of visits meets the requirement for a "regularly returning customer" (box 14, ) VIP Handling is granted (Box 15) otherwise "Call in Tables available" (Box 28) are displayed

If the querying customer is calling and his/ her number **is not found** in the restaurant database, the query is checked via the centralized database (Database of all associated restaurants) if the querying person's telephone number is associated with entries in the centralized database originating from reservations in other restaurants (box 10). If the requiring customers calling from a mobile number or a landline number the same procedures as with queries in the restaurant databases are executed with the centralized database of all associated restaurants.

If for the querying person no entry is found in the restaurants own database, the central database checks whether the querying person had been awarded a Premium customer status (box 17). If respective data is stored the credentials will be displayed to the order taker in the restaurant and if the Restaurants rules treat a premium customer like a " regularly returning customers" the diner gets access to VIP Treatment (Box 16)

If the customer has returned a sufficient number of times, based on restaurants rules, the restaurant gives access to an additional set of tables reserved for " regularly returning customer" (box 16).

If no customer status record is found in the centralized database, manual attention (box 11) is required to fill in Prename and Family name.

If querying person is found in the centralized database, but no Premium Customer status is recorded, the centralized database checks if the querying person is recorded in the centralized celebrity database (Box 19), if this is the case, this may grant him (at the discretion of the restaurant) VIP status (box 16).

If querying person is recorded in the centralized database but not as a Premium or celebrity customer, database checks the availability of standard "call-in Tables" availability (box 28).

If tables are not available, there will be a decline (box 29). System proposes acceptance or denials of reservation requests, but reservation manager may overrule the booking manually. All transactions are logged in the log file.

If Table is available, a reservation will be made (Box 20) and an SMS will be send to confirm the reservation (box 26).

If there is a table request decline or a confirmation, Customer data are updated (Box 27) .

A table confirmation may result in an event, that the diner is recognized as a first time customer (box 12), than the restaurant may send him after the visit a Bounce back SMS + Voucher (box 13).

A table confirmation may result in a new "regularly returning customer" (box 21), than the diner will be informed via SMS (box 22).

A Table confirmation may result in the event that the returning customer missed the required number of visits (box 24) to receive the status as a "preferred returning Customer", then the diner will be informed via SMS how many visits are required to obtain the preferred status (box 23).

A querying person, registered on a web portal through the centralized database, can search all restaurants, offering him "regularly returning Customer status" , he can search all other restaurants, where he made a reservation in the last 12 months and see their requirements for preferred table access and the required reservations needed to uograde is status.

A-customers: don't need a reservation, for them a table is always available.

B customers: are returning customers with a frequency of reservations fulfilling the criteria of a certain number of visits in a predetermined period of time, set by the restaurant manager.

C-Customers first time customers or retuning customers, who have not meet the restaurants criteria of X visits in a given period of time, set by the restaurant manager.

Identifying and keeping track of B customers is crucial for the restaurant manager in order to raise the revenue per average check. Actually it is very difficult to merge web based reservation, telephone reservations and walk in reservations, what makes the identification of a B Customer difficult. With the method of the invention the unique identifier allows always to keep track of returning guests by accurately their amount of visits, making sure all the data remains up to date (data such as: name, email, credit card,...) and avoid having 2 or sometimes 3 uncompleted profiles for a same person.

To qualify a B Customer he does have to fulfill the above defined criteria, this criteria has to be fulfilled on an ongoing basis calculated on a 12 month cycle.

When the customer has fulfilled the restaurants criteria to become a "regularly returning customer", a visible sign on the operator's webpage, like a green flag, shows him that he is now ranked as a returning customer and may start booking blocked B-customer table previously invisible.

After the customer has paid, the waiter has a chance to grade the customer as a "Premium Customer" based on:
- The total bill was way above the average check per cover because the guest enjoyed expensive wine and spirits.
- The TIP Percentage

Expensive wines: System rates restaurants based on their wine list and if they have expensive wines on the list they are certified as sommelier restaurants having the right to mention that a specific customer is an expensive wine consumer ("wine conesseur". Sommelier restaurants have the right to add 1-3 wine glasses to the customer based that his consumption is 2 times, 2-5 times or more than 5 times the average consumption per cover.

Invention counts these ratings of different restaurants in a predefined period and creates an algorithm to make this customer a premium customer, independent from the view of the single restaurant.

Premium costumers are visible on the reservation webpage of the Restaurant with a visible sign that they are rated as premium Tipp or premium Wine customers.

The restaurant manager may opt - but is not obliged - to include premium customers in their B- or even A- customer reservation list.

Online registered "premium customers" see their premium status in the portal and also see for which restaurant blocked tables are available , by displaying the C Customers tables and the "regularly returning costumer tables" in different colors.

If a customer booked the first time a restaurant, the restaurant manager would like to gain him as a regular customer. With the stored mobile phone number in the database, the manager can screen the database for first time customers or customers not making sufficient reservations to keep the returning customer status. Restaurant can send all or a part of the target customer group a voucher per SMS linking to a webpage of the operator (like an electronic boarding card)for a free item to consume.

The voucher displays a menu product with a barcode as a gift, valid up to a certain date. If customer calls or books online, this information is displayed immediately on the reservation desk and the information can be printed and scanned by the waiter so the waiter can book the complementary product as a free product, documented in the invoice.

## Claims

1. A restaurant reservation method comprising
- Receiving a reservation query from a person indicating a reservation requirement for one of a plurality of member restaurants;
- Determining a unique identifier of the querying person;
- Identifying the querying person via the determined unique identifier by comparing it with a plurality of unique identifiers stored in a centralized database and related to entries of customers from the plurality of member restaurants having access to the centralized database;
- Giving access to different sets of tables to the querying person depending either
- on the frequency of reservations within a predetermined period of time in the one member restaurant the reservation query is related to fulfilling the one member restaurant's criteria for privileged access of tables or
- on the consumption of wine and/or on the tip spent within a predetermined period of time in at least two of the plurality of member restaurants fulfilling the plurality of restaurant's criteria for premium customer status.

2. Restaurant reservation method according to claim 1, wherein the unique identifier is the person's mobile phone number.

3. Restaurant reservation method according to claim 1 or 2, comprising determining the unique identifier by requesting an input from the querying person.

4. Restaurant reservation method according to claim 1 or 2, comprising determining the unique identifier automatically from telephone calling information.

5. Restaurant reservation method according to claim 1 to 4, comprising providing at least the information to the restaurant manager whether or not the querying person is a regularly returning customer in the one of the member restaurants the query is related to.

6. Restaurant reservation method according to claims 1 to 5, comprising retrieving further customer data from the centralized database in case the customer has approved to it.

7. Restaurant reservation method according to claims 1 to 6, wherein the reservation requirement comprises the number of diners accompanying the querying person.

8. Restaurant reservation method, according to any of claims 1 to 7, comprising displaying a reservation form including the querying person's prename and family name and an inventory of restaurant tables based on reservation time and returning customer priority.

9. Restaurant reservation method, according to any of the preceding claims, wherein giving access to different set of tables comprise a splitting of the tables in peak times for A- costumers who do not need a reservation, B-costumers who are regularly returning costumers meeting the restaurant's criteria for privileged access of tables and C-costumers who are first time or returning customers who have not met the restaurant's criteria for privileged access of tables.

10. Restaurant reservation method according to any of the preceding claims, comprising in case the unique identifier of the querying person has not been recorded in the centralized database by the restaurant but has been recorded by another restaurant having access to the centralized database displaying at least part of the recorded querying person's data including prename, name and credentials.

11. Restaurant reservation method, according to any of the preceding claims, comprising in case the querying person's unique identifier was not yet recorded, connecting a search engine related to the centralized database to specialized look up databases for searching the name of the querying person.

12. Restaurant reservation method, according to any of the preceding claims, wherein the ratings of different restaurants in a predefined period are counted and an algorithm is created in order to give a customer an independent premium customer rating.

## Amended claims

### Amended claims in accordance with Rule 137(2) EPC.

1. A restaurant reservation method comprising
- Receiving a reservation query from a person indicating a reservation requirement for one of a plurality of member restaurants;
- Determining the identity of the querying person;
- Giving access to different sets of tables to the querying person depending either
- on the frequency of reservations within a predetermined period of time in the one member restaurant the reservation query is related to fulfilling the one member restaurant's criteria for privileged access of tables or
- on the consumption of wine and/or on the tip spent within a predetermined period of time in at least two of the plurality of member restaurants fulfilling the plurality of restaurant's criteria for premium customer status, **characterized by** the steps of
- Determining a unique identifier of the querying person;
- Identifying the querying person via the determined unique identifier by comparing it with a plurality of unique identifiers stored in a centralized database and related to entries of customers from the plurality of member restaurants having access to the centralized database;
wherein the unique identifier is the person's mobile phone number; and
- Determining the unique identifier automatically from telephone calling information.

2. Restaurant reservation method according to claim 1, comprising providing at least the information to the restaurant manager whether or not the querying person is a regularly returning customer in the one of the member restaurants the query is related to.

3. Restaurant reservation method according to claims 1 to 2, comprising retrieving further customer data from the centralized database in case the customer has approved to it.

4. Restaurant reservation method according to claims 1, 2 or 3, wherein the reservation requirement comprises the number of diners accompanying the querying person.

5. Restaurant reservation method, according to any of claims 1 to 4, comprising displaying a reservation form including the querying person's prename and family name and an inventory of restaurant tables based on reservation time and returning customer priority.

6. Restaurant reservation method, according to any of the preceding claims, wherein giving access to different set of tables comprise a splitting of the tables in peak times for A- costumers who do not need a reservation, B-costumers who are regularly returning costumers meeting the restaurant's criteria for privileged access of tables and C-costumers who are first time or returning customers who have not met the restaurant's criteria for privileged access of tables.

7. Restaurant reservation method according to any of the preceding claims, comprising in case the unique identifier of the querying person has not been recorded in the centralized database by the restaurant but has been recorded by another restaurant having access to the centralized database displaying at least part of the recorded querying person's data including prename, name and credentials.

8. Restaurant reservation method, according to any of the preceding claims, comprising in case the querying person's unique identifier was not yet recorded, connecting a search engine related to the centralized database to specialized look up databases for searching the name of the querying person.

9. Restaurant reservation method, according to any of the preceding claims, wherein the ratings of different restaurants in a predefined period are counted and an algorithm is created in order to give a customer an independent premium customer rating.
